# EUROPEAN PATENT APPLICATION

(11) **EP 1 208 890 A1**
(43) Date of publication of application: **29.05.2002**
(21) Application number: 01204048.1
(22) Date of filing: 24.10.2001
(51) Int. Cl.: A63G 25/00, B60P 3/025

(54) **Portable decking for vehicles**

(30) Priority: 03.11.2000 GB 0026864
(71) Applicant: Matthews, Thomas Joseph Alfred, Redhill, Surrey RH1 5QL (GB)
(72) Inventor: Matthews, Thomas Joseph Alfred, Redhill, Surrey RH1 5QL (GB)
(74) Representative: Weatherald, Keith Baynes

(57) **Abstract**

A deck for dodgems (bumper cars) to form part of a travelling fair has a central portion (4) intended to be fixed to a road trailer. Hinged to each major side of the central portion is a pair of hinged leaves (6) each intended to form part of the deck when in their unfolded, coplanar, positions. To permit the major axis of the deck to be longer than usual, but without raising the height of the hinged leaves (6) to an impermissible value for travel along roads, the length of at least the outer leaf of each pair is made adjustable. Each outer leaf includes a series of parallel stringers (22) that are effectively of adjustable length, the stringers (22) bearing three deck plates (10,12,14), of which two are fixed to the stringers, while the central one is movable relative to the other two between a coplanar position and a stacked position. This arrangement of the plates permits the distance between the inner and outer plates to be altered to shorten or extend the effective width of the respective leaf.

When all the leaves are in their shortest-width condition, and moved so that the hinged leaves extend transversely to the central portion, the height of the leaves is less than the legal limit for road travel.

## Description

This invention relates to portable decking for vehicles in general, and in particular to a portable deck for dodgems for travelling fairs. Dodgems are usually important components of fairgrounds, which can be either fixed or mobile (travelling fairs). The usual size of a dodgems' deck is 60 x 40 feet (c. 12 x 18 m), although the longer axis may be up to 70 feet (c. 21 m). A structure of this general type is disclosed in US 4 522 390.

US 5 577 351 discloses a structure for mobile living quarters, of which one room can be extended in area by sliding one wall outwardly, the floor for the room being in two sections, of which one is fixed and the other is movable between a stacked position and a coplanar position. US 5 765 316 discloses a building module that is collapsible for transport, comprising at least one floor section hinged to a rigid core structure. The hinged section comprises several telescopic struts connected to a wall extending perpendicularly to the struts. The lengths of the struts can be controlled to vary the area of the surface extending between the wall and the hinge axis.

To permit a deck for dodgems to be transported along roads, it is necessary for the deck to be subdivided into manageable portions, each as long as the width of the deck when in use, *i.e.* about 40 feet (12 m) long. It is known to subdivide the length of the deck into a central section seven feet (2 m) wide; two pairs of hinged leaves each c. 11 feet (3.4 m) wide, and a terminal leaf c. five feet (1.6 m) wide. This suffers from the disadvantage that the means whereby the three leaves on each side of the central section are moved between their coplanar work positions and their folded-for-travel positions are complicated and time-consuming.

The present invention aims at overcoming this disadvantage by providing a dodgems' deck comprising a central section with flanking pairs of folding leaves, of which the width of at least the outermost leaf can be altered to facilitate handling. When in their work positions, the terminal leaves are c. 15 feet (4.5 m) wide, but they can be shortened to c. 11 feet (3.4 m) for travel. When so folded, the need for a third leaf is obviated. The height of 15 feet from the bed of the trailer on which the deck is transported would bar the trailer from being towed on most roads. However, reducing the height of the outer leaves to 11 feet makes the overall height of the trailer acceptable for towing.

Accordingly, the present invention provides a portable deck that is as claimed in the appended claims.

The present invention will now be described by way of example, with reference to the accompanying drawings, in which:
Figure 1 is a plan view of a dodgems' deck of this invention, with the right-hand part showing the structure of the support framework with the deck plates removed;
Figure 2 is a diagrammatic end view of a dodgem trailer carrying the deck of this invention in its folded (travel) position;
Figure 3 is a diagrammatic perspective view of one embodiment of this invention, showing a terminal leaf of the deck in its work position;
Figure 4 is a section along the line IV-IV of Fig. 3, showing the relative positions of the three deck plates of the terminal leaf;
Figure 5 is a view of the embodiment of Fig. 3 in its retracted (travel) position;
Figure 6 is a diagrammatic perspective view of a second embodiment of this invention, similar to Fig. 3;
Figure 7 is a section along the line VII-VII of Fig. 6, showing the three deck plates, and
Figure 8 is a diagrammatic perspective view of the deck of the second embodiment, in its travel position.

In the drawings, those parts that are common to several Figs. retain their original references.

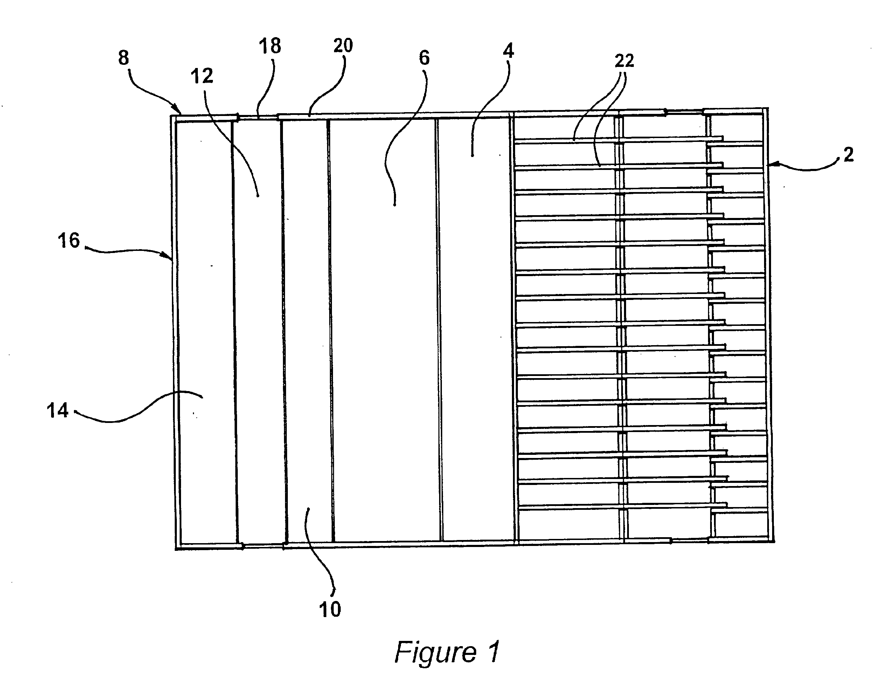

In the deck 2 shown in plan in Fig. 1, a central section 4 intended to function as the bed of a road trailer is about seven feet (2 m) wide, and is about 40 feet (12 m) long. Hinged to its longer sides are two inner leaves 6, each about 11 feet (3.3 m) wide. Hinged to the outer edges of the inner leaves 4 are two outer leaves 8 in accordance with this invention. In one embodiment of this invention, the maximum width of each outer leaf 8 is c. 15 feet (4.58 m), but it can be retracted for travel to a length of c. 11 feet (3.3 m). For this purpose, the outer leaf has its deck surface formed of three plates, of which the inner plate 10 is fixed and is c. five feet (1.5 m) wide. The intermediate plate 12 next to it is c. four feet wide, and it is intended to be movable to a travel position in which it overlies the outer plate 14, which is c. six feet wide. The reader will appreciate that these dimensions add up to a deck having a major length of c. 59 feet (18 m). When it is desired to increase this major dimension, it is within the purview of this invention to make the inner leaf 6 of the folding pair also of the extensible construction discussed below. In such a case, the overall length of the deck would be 67 feet (20.5 m). However, it will be appreciated that this invention does not reside in the particular dimensions of the deck or component leaves, but in the general shape and construction.

All the deck plates are bounded by a box border 16 to act as a barrier preventing the dodgem cars from running off the deck. In the region of the intermediate plates, the border has smaller-sectioned parts 18 that are in telescopic engagement with at least one of the contiguous border parts 20. The parts 18 are also hollow, and coöperate with the adjacent parts to house a hydraulic ram (not shown) having its ends secured to the respective parts 20 so that, when the ram is operated to reduce its length, the outer plate and associated border are translated towards the fixed inner plate 10. The converse takes place when the deck is to be moved into its work position. The movement of the intermediate plate to accommodate this movement will be discussed below.

As can be seen from the right-hand part of Fig. 1, the support framework includes an array of parallel stringers 22. The stringers may be fitted with electroconductive strips (not shown) on which the deck plates rest, so that the plates are all in electrical contact with each other through the strips. Each stringer for the outer leaves 8 is in two parts in slidable engagement with each other, so that the upper surfaces of the stringers remain in the same plane, while the axial lengths of the stringers of the leaf are changed to accommodate the retraction and extension of the leaf. The manner in which the two lengths of stringer are secured together to permit relative movement does not form part of the subject-matter of this invention, and so will not be described herein in any further detail.

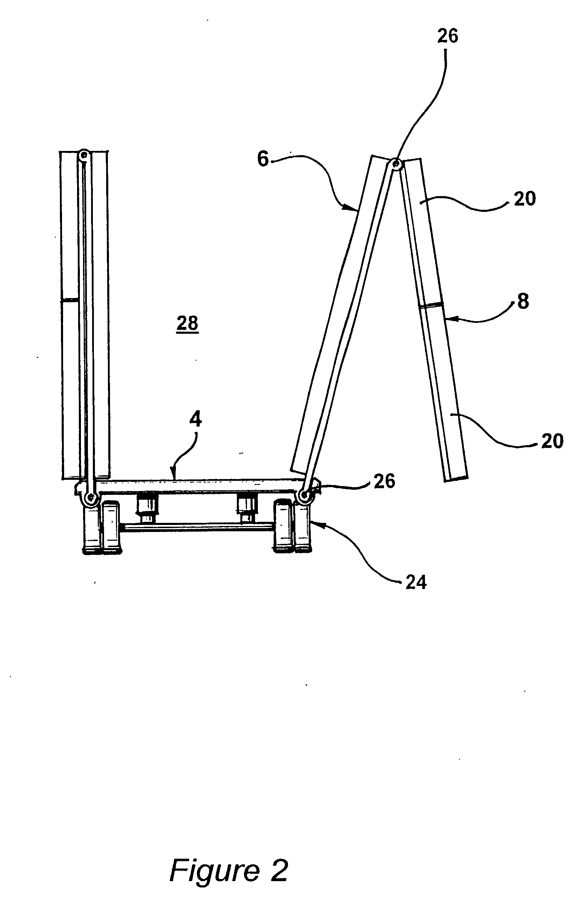

As shown in Fig. 2, the deck is intended to be mounted on a road trailer 24 for transport. The trailer has a chassis (not shown) on which the central section 4 of the deck is secured. By means which are known, the inner leaves 6 are folded about the axes of their hinges 26 until they are upright. Prior to this, the outer leaves 8 are moved to their contracted positions, in which they are virtually the same width as the inner leaves. The outer leaves are secured to the inner leaves through hinges 26. When both pairs of outer leaves are in their folded, 'travel', position, they form between them, as is known, a space 28 for housing all the associated dodgem cars and other equipment (not shown).

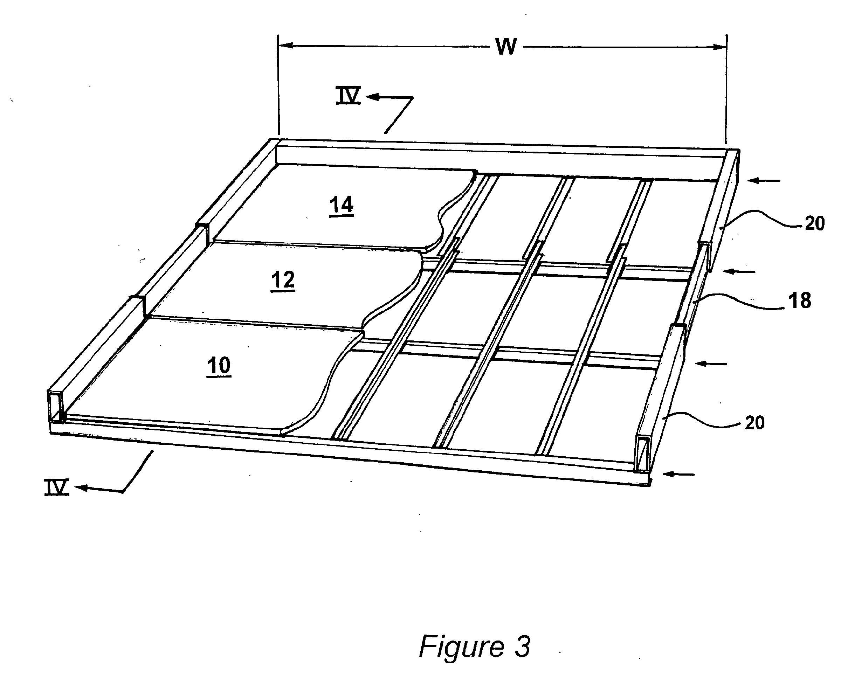

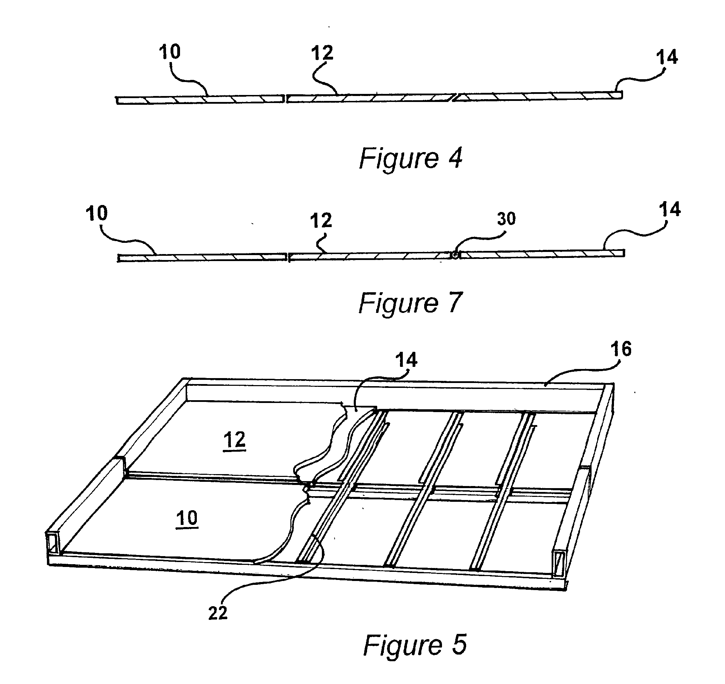

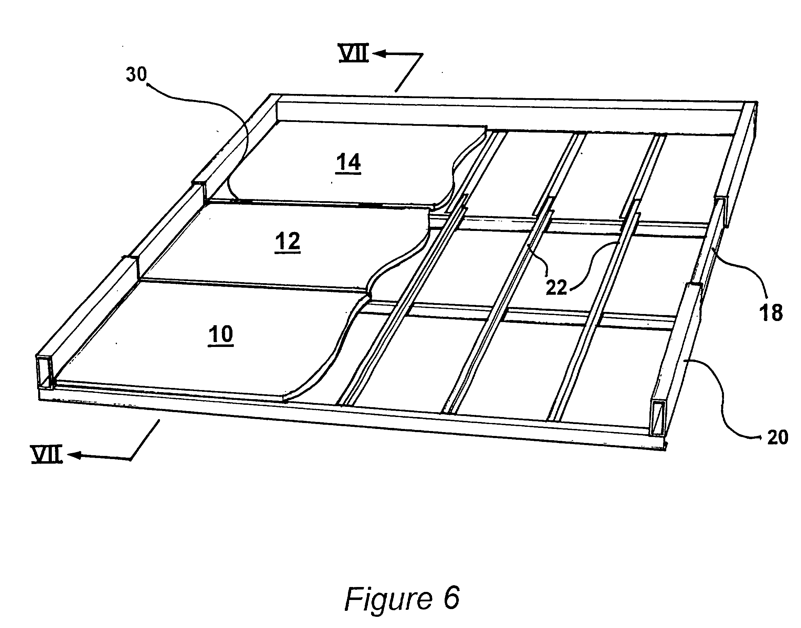

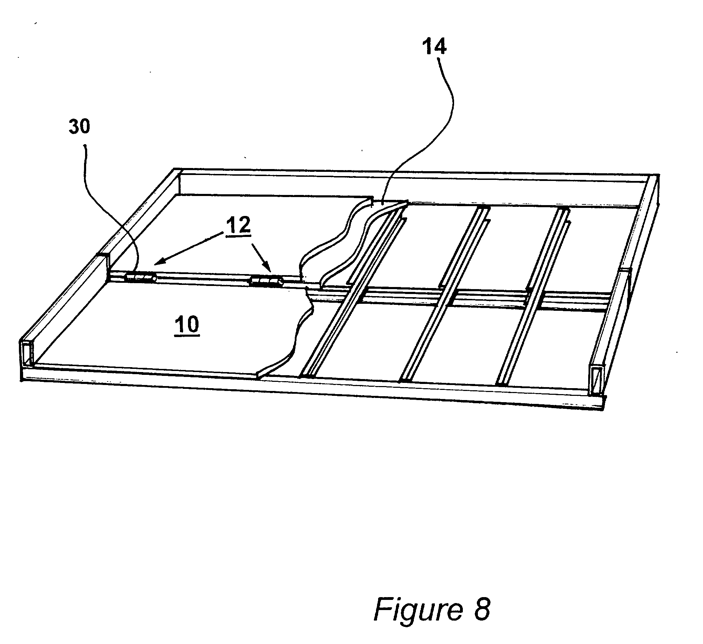

Fig. 3 shows one embodiment of this invention, in which the intermediate plates 12 are slidable relative to the outer plates 14. The outer plates are secured to their underlying stringers, in known fashion, but the intermediate plates are secured to the stringers only in the region of their contact with the inner plates 10. They are secured by means of spring-loaded bolts (not shown) which prevent the plates from moving longitudinally over the sliders, but which permit the plates to lift off the stringers and fall back on to them. As shown in Fig. 4, the facing side faces of the plates 12 and 14 are chamfered, with the direction of slope being such that, when the opposing faces are forced into contact with each other by operation of the hydraulic rams, the leading edge of the intermediate plate rides up on to the top of the outer plate. As the retraction movement continues, the intermediate plate comes to lie in parallel with the outer plate, and continues to slide over it until the outer leaf reaches its minimum width, in which the overall width of the outer leaf is c. 11 feet. Fig. 5 shows the outer leaf in this position. In both Figs. 3 and 5, parts of the plates have been removed to show the underlying structure. In the embodiment of Figs. 6-8, the principal difference is that the intermediate and outer plates are secured together by means of hinges 30. When the outer leaf is to be moved to its travel position, the intermediate plate 12 is folded about its hinges until it comes to lie on top of the outer plate. While the plate 12 may be pivoted manually, because of its mass it would usually be moved by some suitable temporary lifting device (not shown). As will be obvious, all these movements are reversed when the deck is to be unfolded into its work position. The need to provide means for lifting these relatively-massive plates under control through 180° in both directions adds to the expense of this embodiment.

Accordingly, it will be seen that the present invention provides a dodgems' deck of simplified construction that offers significant advantages over existing portable decks for travelling fairs.

## Claims

1. A portable deck for vehicles, comprising a rectangular central strip extending across the full width of the deck, the central strip having a pair of hinged leaves pivotally attached to each of its side edges, in which at least one of the hinged leaves is of adjustable width in the direction transverse to the hinge axis; in which each adjustable-width leaf carries metal deck plates in electrical contact with each other, the plates being divided into an outer plate movable with the outer part of the leaf; an inner plate fixed relatively to its inner part, and an intermediate plate movable relatively to its adjacent plates between a work position in which the three plates are coplanar, and a travel position in which two of the plates are parallel to, and in contact with, each other.

2. A deck as claimed in claim 1, in which the deck has a framework including stringers extending in parallel with the longitudinal axis of the deck, the stringers being adapted to contact the under-surfaces of deck plates either directly or through conductive strips which connect adjacent plates together electrically, the stringers of the or each adjustable leaf being in two parts which are slidable relatively to each other to accommodate the movement of the outer part of the leaf between its work and travel positions.

3. A deck as claimed in claim 1 or 2, in which the deck has edge barriers secured to its framework, the barriers of each adjustable leaf extending parallel to the stringers having hollow outer portions in which smaller inner portions are movable telescopically, to permit the lengths of the barriers to be altered while maintaining their mechanical integrity.

4. A deck as claimed in any preceding claim, in which the intermediate or outer plates are movable laterally of their stringers to permit one plate to slide over the other when the plates are moved between their work and travel positions.

5. A deck as claimed in any of claims 1-3, in which the intermediate and outer plates are hinged together to permit one to be folded about the hinge axis to move between their work and travel positions.

6. A deck as claimed in claim 3 or any claim dependent therefrom, in which the smaller barrier portions of each adjustable leaf are also hollow, and in which the two parallel side barriers house hydraulic rams by means of which the outer part of each adjustable leaf is able to be moved between its work and travel positions.

7. A portable deck for vehicles substantially as described herein with reference to, and as shown in Figs. 1-5, or Figs. 1, 2, and 6-8, of the accompanying drawings.
